(19) Europäisches Patentamt
European Patent Office
Office européen des brevets

(11) Veröffentlichungsnummer : **0 013 027**
**B1**

(12) # EUROPÄISCHE PATENTSCHRIFT

(45) Veröffentlichungstag der Patentschrift : **29.07.81**

(51) Int. Cl.³ : **D 21 C 5/02**

(21) Anmeldenummer : **79105370.5**

(22) Anmeldetag : **24.12.79**

(54) **Verfahren zum Deinken von bedrucktem Altpapier.**

(30) Priorität : **30.12.78 DE 2856845**

(43) Veröffentlichungstag der Anmeldung : **09.07.80 (Patentblatt 80/14)**

(45) Bekanntmachung des Hinweises auf die Patenterteilung : **29.07.81 Patentblatt 81/30**

(84) Benannte Vertragsstaaten : **BE CH DE FR GB IT NL SE**

(56) Entgegenhaltungen : **DE - A - 2 703 020**

(73) Patentinhaber : **Henkel Kommanditgesellschaft auf Aktien -Patentabteilung- Postfach 1100 Henkelstrasse 67 D-4000 Düsseldorf 1 (DE)**

(72) Erfinder : **Hornfeck, Klaus August-Burberg-Strasse 34 D-4020 Mettmann (DE)**
Erfinder : **Rutzen, Horst, Dr. Falkenweg 12 D-4018 Langenfeld (DE)**

**EP 0 013 027 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Verfahren zum Deinken von bedrucktem Altpapier

Deinking-Verfahren haben die Aufgabe, Druckfarben aus Altpapier zu entfernen. Die so gewonnenen Regeneratstoffe werden in großem Umfang bei der Erzeugung von Druckpapieren und Toilettenkrepp eingesetzt.

Das Deinking-Verfahren besteht im wesentlichen aus folgenden Teilschritten :

1. Ablösung der Druckfarbenpigmente von der Faser im Stofflöser (Pulper) durch Zusatz geeigneter Chemikalien,

2. Ausscheidung der abgelösten Druckfarbenteilchen aus der Faserstoffsuspension.

Der zweite Verfahrensschritt geschieht vorzugsweise mit Hilfe des Flotationsprinzips.

Üblicherweise wird das Deinken bei alkalischen pH-Werten von etwa 9,5-11 unter Zusatz von Alkalisilikat, oxidativ wirkenden Bleichmitteln, höheren Fettsäuren oder deren löslichen Salzen, sowie nichtionogenen Dispergiermitteln durchgeführt. Die Einstellung des pH-Wertes, vorzugsweise pH 10-10,5, erfolgt mittels Alkalihydroxid, z.B. NaOH. Der Alkalizusatz liefert die zur Verseifung der Druckfarbenbindemittel, zur Druckfarbenablösung und zur Neutralisation der eingesetzten Fettsäuren erforderliche Alkalität. Diese führt jedoch bei dem meist verwendeten holzstoffhaltigen Altpapierstoff aus Zeitungen und Zeitschriften zu starker Vergilbung.

Die Vergilbung wird durch den Einsatz von oxidativ wirkenden Bleichmitteln, wie Wasserstoffperoxid oder Natriumperoxid, weitgehend verhindert. Bei Verwendung von Natriumperoxid ist ein Zusatz von Alkalihydroxid nicht oder nur in geringerem Maße erforderlich. Zur Stabilisierung des Aktivsauerstoffs des Peroxid-Bleichmittels wird Alkalisilikat (Wasserglas) verwendet. Dieses wirkt durch Bindung der Schwermetallionen ; gleichzeitig puffert es die Bleichlösung und wirkt als Korrosionsinhibitor.

Die Fettsäuren werden in der alkalischen Flotte in deren Metallsalze überführt, die die Oberflächenspannung der Phase Wasser/Luft herabsetzen. Ein Teil der gebildeten löslichen Metallseife wird durch Calciumionen des Betriebswassers in unlösliche Calcium-Seife überführt. Diese lagert sich an die abgelösten Druckfarbenteilchen an und hydrophobiert sie. Dadurch werden sie von den hydrophilen Fasern abgehoben und können durch Flotation ausgeschieden werden. Als Fettsäuren kommen gesättigte und ungesättigte Monocarbonsäuren mit C-Kettenlängen von $C_8$ bis $C_{22}$, insbesondere Ölsäure, in Betracht. Anstelle der Fettsäuren können auch deren lösliche Salze, z.B. Alkali- oder Alkanolaminsalze, eingesetzt werden.

Die nichtionogenen Dispergiermittel dienen als Dispergatoren für die Druckfarbenpigmente. Sie wirken außerdem als Schäumer bei der Flotation. Geeignete nichtionogene Dispergiermittel sind Alkylenoxidaddukte an höhere hydrophobe Reste enthaltende Verbindungen, z.B. $C_{10}$-$C_{22}$-Fettalkohole oder $C_4$-$C_{12}$-Alkylphenole mit einem Gehalt an 5-40 Alkylenoxidgruppen. Als Alkylenoxide kommen Ethylenoxid und/oder Propylenoxid in Betracht. Beispiele für geeignete Dispergiermittel sind das Addukt von 8-12 Mol Ethylenoxid an ein Oleyl-Cetylalkoholgemisch, oder das Addukt von 9,5-10 Mol Ethylenoxid an Isononylphenol.

Üblicherweise werden folgende Chemikalien, bezogen auf Altpapier, eingesetzt :

2 - 5 Gew.-% Alkalisilikat (Na-Wasserglas)
0,5 - 3 Gew.-% Wasserstoffperoxid (100 %ig)
0,5 - 2 Gew.-% Natriumhydroxid (100 %ig)
0,5 - 2 Gew.-% Fettsäuren oder deren Salze
0,02-0,5 Gew.-% nichtionogene Dispergiermittel

Die Stoffdichte im Pulper beträgt 4-6 Gew.-% und in den Flotationszellen 0,5-2 Gew.-%. Die Prozeßtemperatur beträgt üblicherweise 35-45 °C. Die Flotation erfolgt in bekannter Weise durch Einblasen von Luft in die Stoffsuspension. Die Verweilzeit des Stoffes in den Flotationszellen beträgt etwa 10-20 Minuten.

Die Beurteilung des deinkten Papiers erfolgt mittels Weißgradmessung, wobei der Weißgrad in Prozent angegeben wird. Mischt man Tageszeitungen und Illustrierte im Verhältnis 1 : 1, und behandelt sie mit den vorstehend genannten Chemikalien nach der bekannten Arbeitsweise, so wird ein Weißgrad von 56-60 % erzielt. Demgegenüber beträgt der Weißgrad der unbedruckten Randstreifen 65-68 %.

Das bekannte Verfahren weist jedoch einige Nachteile auf. Die Verweilzeit in den Flotationszellen von 10-20 Minuten gestattet nur eine geringe Durchsatzleistung, weil sonst der Weißgrad deutlich abnimmt. Ferner agglomerieren sich die im flotierten Papierstoff noch vorhandenen hydrophobierten Druckfarben im Stoff-Führungssystem und verursachen Betriebsstörungen auf der Papiermaschine. Dadurch ist auch das Verhältnis von deinktem Stoff zu Neustoff begrenzt. Schließlich führt die relativ hohe Prozeßtemperatur einerseits zur Zersetzung des Peroxids, andererseits zur Erweichung von über das Altpapier eingebrachten Kunstharz-Bindemitteln (Hotmelts ; z.B. aus gebundenen Katalogen oder dgl). Diese klebrigen Rückstände lassen sich nur schwer mechanisch entfernen und verursachen Betriebsstörungen.

Bisherige Versuche haben gezeigt, daß eine wesentliche Weißgradsteigerung über 60 % hinaus nur durch einen zweiten Prozeßdurchlauf möglich ist.

Aufgabe der Erfindung ist es, das an sich bekannte Deinkingverfahren so zu verbessern, daß unter Beibehaltung der vorhandenen Anlagen der Druckfarbenaustrag beschleunigt, der Anteil an flotierten Druckfarben unter Weißgradsteigerung erhöht und die Prozeßtemperatur ohne Bleichverlust gesenkt werden kann.

Gegenstand der Erfindung ist ein Verfahren zum Deinken von bedrucktem Altpapier durch Behandeln des Papierstoffes im Stofflöser bei alkalischen pH-Werten mittels Alkalisilikat, oxidativ wirkenden Bleichmitteln, höheren Fettsäuren

oder deren Salzen und nichtionogenen Dispergiermitteln und Ausscheiden der abgelösten Druckfarbenteilchen aus der Faserstoffsuspension durch Flotation, dadurch gekennzeichnet, daß man im Stofflöser 1-20 Gew.-%, bezogen auf Fettsäure oder Fettsäuresalz, eines α-Hydroxyaminderivates der allgemeinen Formel

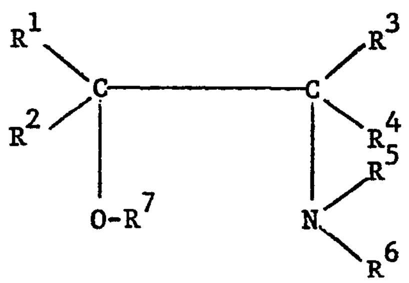

(I)

worin

$R^1$, $R^2$, $R^3$, $R^4$ = H oder gleiche oder verschiedene $C_1$-$C_{17}$-Alkylgruppen sind, wobei die Summe der C-Atome in $R^1$, $R^2$, $R^3$, $R^4$ = 6-22 beträgt,

$R^5$, $R^6$ = H oder gleiche oder verschiedene $C_1$-$C_{17}$-Alkylgruppen oder Gruppen der Formel $(C_nH_{2n}O)_xH$ sind, worin n = 2 oder 3 und x = 1-10 ist,

$R^7$ = H oder eine Gruppe der Formel $(C_nH_{2n}O)_xH$, worin n = 2 oder 3 und x = 1-10 ist, oder 1-20 Gew.-Teile eines davon abgeleiteten, durch Einführung einer $C_1$-$C_4$-Alkylgruppe am Stickstoff quaternierten α-Hydroxyaminderivates, zusetzt.

Geeignete α-Hydroxyaminderivate der Formel (I) werden erhalten durch Umsetzung von end- oder innenständigen $C_8$-$C_{24}$-Olefinen mit Epoxidierungsmitteln, z.B. Peressigsäure, Perameisensäure, $H_2O_2$/Eisessig oder $H_2O_2$/Ameisensäure unter Bildung der entsprechenden Olefinepoxide und anschließende Aminolyse mit Ammoniak oder Aminen, vorzugsweise sekundären Aminen wie Dimethyl-, Diethyl-, Diethanol- oder Dipropanolamin. Die Verbindungen können weiterhin mit Ethylenoxid und/oder Propylenoxid umgesetzt werden, wobei sowohl am O-Atom wie auch am N-Atom jeweils 1-10 Alkylenoxidreste eingeführt werden können. Bevorzugt werden die durch Epoxidierung von geradkettigen $C_{12}$-$C_{14}$-Olefinen und Aminolyse mit Alkanolaminen erhaltenen α-Hydroxyaminderivate verwendet.

Die α-Hydroxyaminderivate können ganz oder teilweise durch Einführung einer $C_1$-$C_4$-Alkylgruppe am N-Atom quaterniert werden. Die Quaternierung erfolgt in bekannter Weise z.B. durch Umsetzung mit entsprechenden Alkylhalogeniden, Dialkylsulfaten oder dgl.

Die α-Hydroxyaminderivate oder deren Quaternierungsprodukte werden in Mengen von 1-20 Gew.-%, bezogen auf Fettsäure oder Fettsäuresalz, eingesetzt. Bevorzugt werden Mengen von 5-15 Gew.-%. Die Fettsäuren bzw. Fettsäuresalze werden im Pulper in einer Menge von 0,5-2 Gew.-%, bezogen auf Altpapier, zugesetzt. Besonders bevorzugt wird Ölsäure, die auch ganz oder teilweise als Alkanolaminsalz vorliegen kann.

Das Deinking-Verfahren wird in an sich üblicher Weise unter Einsatz der eingangs genannten Chemikalien durchgeführt. Es werden Altpapiere aus Zeitungen, Illustrierten, Katalogen usw. verarbeitet, wobei die Stoffdichte im Pulper 4-6 Gew.-% beträgt.

Infolge der guten Druckfarbenablösung wird ein hoher Druckfarbenaustrag bei der Flotation und damit ein höherer Weißgrad des Papierstoffes bereits bei einmaligem Durchgang erreicht. Eine Senkung der Arbeitstemperatur auf 15-20 °C führt zu einer weiteren Verbesserung des Weißgrades, so daß selbst bei einer Verkürzung der Flotationsdauer gegenüber dem herkömmlichen Verfahren noch ausreichende Papierstoffqualitäten erhalten werden. Störungen durch koagulierte Druckfarben oder klebrige Hotmelt-Rückstände können fast völlig vermieden werden.

## Beispiele

1. 20 g eines Papiergemisches bestehend aus 10 g Tageszeitungen und 10 g Illustrierten wurden 6 Minuten bei einer Stoffdichte von 5 % bei 20 und 45 °C aufgeschlagen. Während der Aufschlagzeit wurden folgende Chemikalien, bezogen auf Papiereintrag, zudosiert :

3 Gew.-% Na-Wasserglas 37/40° Be
1 Gew.-% Wasserstoffperoxid
1,5 Gew.-% Natriumhydroxid
1 Gew.-% Ölsäure
0,1 Gew.-% Oleyl-Cetylakoholpolyglykolether. 7EO

Die Quellzeit betrug ca. 2 Stunden.

Der Papierstoff wurde mit Wasser von ca. 18° dH auf 1 Gew.-% Stoffdichte verdünnt und 6 Minuten in einer Denver-Flotationszelle flotiert.

Nach der Neutralisation des deinkten Stoffes mit Schwefelsäure auf pH 6,5 wurden auf einem Blattbildungsgerät Prüfblätter hergestellt.

Am Weißgradmesser wurden folgende Weißgrade ermittelt :

| Prozeßtemperatur | Weißgrad |
|---|---|
| 20 °C | 56 % |
| 45 °C | 60,5 % |

2. Es wurde wie im Beispiel 1 verfahren, die Flotationszeit betrug jedoch nur 2 Minuten. Die Weißgrade betrugen :

| Prozeßtemperatur | Weißgrad |
|---|---|
| 20 °C | 52 % |
| 45 °C | 56 % |

3. Es wurde wie im Beispiel 1 verfahren. Anstelle von 1 % Ölsäure wurde 1 % eines Gemisches, bestehend aus :

90 Teilen Ölsäure und
10 Teilen eines $C_{12}$-$C_{14}$-α-Hydroxyaminderivates, hergestellt aus einem endständigen $C_{12}$-$C_{14}$-Olefin durch Umsetzung mit $H_2O_2$/Ameisensäure zum Epoxid und Aminolyse mit Diäthanolamin zudosiert. Die erhaltenen Weißgrade betrugen :

| Prozeßtemperatur | Weißgrad |
|---|---|
| 20 °C | 65,5 % |
| 45 °C | 63,5 % |

4. Es wurde wie im Beispiel 3 verfahren, die Flotationszeit betrug jedoch nur 2 Minuten.

| Prozeßtemperatur | Weißgrad |
|---|---|
| 20 °C | 61,5 % |
| 45 °C | 60 % |

5. Es wurde wie in Beispiel 1 verfahren, anstelle von 1 % Ölsäure wurde jedoch 1 % eines Gemisches aus
90 Teilen Ölsäure und
10 Teilen eines oxethylierten $C_{11}$-$C_{14}$-Hydroxyaminderivates, hergestellt aus einem innenständigen $C_{11}$-$C_{14}$-Olefin durch Umsetzung mit Perameisensäure zum Epoxid, Aminolyse mit Diäthanolamin und weiterer Reaktion mit 1 Mol Ethylenoxid zugesetzt.

| Prozeßtemperatur | Weißgrad |
|---|---|
| 20 °C | 65,0 % |
| 45 °C | 63,5 % |

6. Es wurde wie in Beispiel 5 verfahren, die Flotationszeit betrug jedoch nur 2 Minuten.

| Prozeßtemperatur | Weißgrad |
|---|---|
| 20 °C | 62 % |
| 45 °C | 60,5 % |

7. Es wurde wie in Beispiel 1 verfahren, anstelle von 1 % Ölsäure wurde jedoch 1 % eines Gemisches aus
90 Teilen Ölsäure und
10 Teilen eines quarternierten $C_{12}$-α-Hydroxyaminderivates, herstellt aus einem $C_{12}$-Olefin durch Umsetzung mit $H_2O_2$/Ameisensäure zum Epoxid, Aminolyse mit Dimethylamin und Quaternierung mit Methylchlorid zugesetzt.

| Prozeßtemperatur | Weißgrad |
|---|---|
| 20 °C | 63,5 % |
| 45 °C | 62,5 % |

8. Es wurde wie in Beispiel 7 verfahren, die Flotationszeit betrug jedoch nur 2 Minuten.

| Prozeßtemperatur | Weißgrad |
|---|---|
| 20 °C | 61,5 % |
| 45 °C | 60,5 % |

**Ansprüche**

1. Verfahren zum Deinken von bedrucktem Altpapier durch Behandeln des Papierstoffes im Stofflöser bei alkalischen pH-Werten mittels Alkalisilikat, oxidativ wirkenden Bleichmitteln, höheren Fettsäuren oder deren Salzen und nichtionogenen Dispergiermitteln und Ausscheiden der abgelösten Druckfarbenteilchen aus der Faserstoffsuspension durch Flotation, dadurch gekennzeichnet, daß man im Stofflöser 1-20 Gew.-%, bezogen auf Fettsäure oder Fettsäuresalz, eines α-Hydroxyaminderivates der allgemeinen Formel

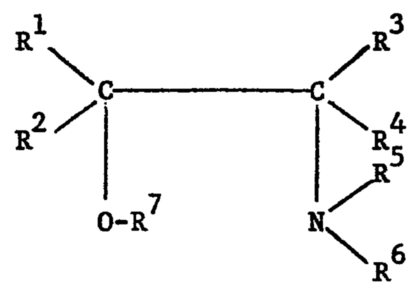

(I)

worin
$R^1$, $R^2$, $R^3$, $R^4$ = H oder gleiche oder verschiedene $C_1$-$C_{17}$-Alkylgruppen sind, wobei die Summe der C-Atome in $R^1$, $R^2$, $R^3$, $R^4$ = 6-22 beträgt,
$R^5$, $R^6$ = H oder gleiche oder verschiedene $C_1$-$C_{17}$-Alkylgruppen oder Gruppen der Formel $(C_nH_{2n}O)_xH$ sind, worin n = 2 oder 3 und x = 1-10 ist,
$R^7$ = H oder eine Gruppe der Formel $(C_nH_{2n}O)_xH$, worin n = 2 oder 3 und x = 1-10 ist, oder 1-20 Gew.-Teile eines davon abgeleiteten, durch Einführung einer $C_1$-$C_4$-Alkylgruppe am Stickstoff quaternierten α-Hydroxyaminderivates, zusetzt.

2. Verfahren nach Anspruch 1, dadurch gekennzeichnet, daß man im Stofflöser folgende Chemikalien, bezogen auf Altpapier, zusetzt
2 -5 Gew.-% Alkalisilikat
0,5 -3 Gew.-% Wasserstoffperoxid (100 %ig)
0,5 -2 Gew.-% Natriumhydroxid (100 %ig)
0,5 -2 Gew.-% Fettsäuren oder Fettsäuresalze
0,005-0,4 Gew.-% eines α-Hydroxyaminderivates der Formel (I) oder eines entsprechenden Quaternierungsproduktes
0,02 -0,5 Gew.-% nichtionogene Dispergiermittel

3. Verfahren nach Anspruch 1 oder 2, gekennzeichnet durch einen Zusatz von 1-20 Gew.-%, bezogen auf Fettsäure oder Fettsäuresalz, eines α-Hydroxyaminderivates der Formel (I), hergestellt aus geradkettigen $C_{10}$-$C_{14}$-Olefinen und gegebenenfalls nachfolgende Quaternierung.

4. Verfahren nach einem der Ansprüche 1-3, dadurch gekennzeichnet, daß die Arbeitstemperatur in Stofflöser 15-25 °C, beträgt.

**Claims**

1. A process for deinking printed waste paper by treating the paper pulp in a pulper at alkaline pH-values with alkali silicate, oxidative bleaching agents, higher fatty acids or their salts and non-ionic dispersants and separating the detached particles of printing ink from the fibre suspension by flotation, characterised in that from 1 to 20 % by weight, based on fatty acid of fatty acid salt, of an α-hydroxyamine derivative corresponding to the following general formula

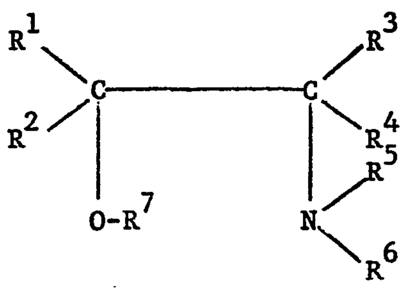

(I)

in which

$R^1$, $R^2$, $R^3$, $R^4$ = H or identical or different $C_1$-$C_{17}$-alkyl groups, the sum of the carbon atoms in $R^1$, $R^2$, $R^3$ and $R^4$ amounting to between 6 and 22,

$R^5$ and $R^6$ = H or identical or different $C_1$-$C_{17}$-alkyl groups or groups corresponding to the formula $(C_nH_{2n}O)_xH$ where n = 2 or 3 and x = 1-10,

$R^7$ = H or a group of the formula $(C_nH_{2n}O)_xH$ where n = 2 or 3 and x = 1-10, or from 1 to 20 parts by weight of an α-hydroxyamine derivative thereof quaternised through the introduction of a $C_1$-$C_4$-alkyl group on the nitrogen, are added in the pulper.

2. A process as claimed in claim 1, characterised in that the following chemicals, based on waste paper, are added in the pulper:

from 2 to 5 % by weight of alkali silicate

from 0.5 to 3 % by weight of hydrogen peroxide (100 %)

from 0.5 to 2 % by weight of sodium hydroxide (100 %)

from 0.5 to 2 % by weight of fatty acids or fatty acid salts

from 0.005 to 0.4 % by weight of an α-hydroxyamine derivative of formula (I) or corresponding quaternisation product

from 0.02 to 0.5 % by weight of non-ionic dispersants.

3. A process as claimed in claim 1 or 2, characterised by an addition of from 1 to 20 % by weight, based on the fatty acid or fatty acid salt, of an α-hydroxyamine derivative of formula (I) produced from straight-chain $C_{10}$-$C_{14}$-olefins, optionally followed by quaternisation.

4. A process as claimed in any of claims 1 to 3, characterised in that the working temperature in the pulper is in the range from 15 to 25 °C.

**Revendications**

1. Procédé pour désencrer les vieux papiers imprimés par traitement de la pâte à papier dans le dissolveur à pH alcalin à l'aide d'un silicate alcalin, d'agents de blanchiment à effet oxydant, d'acides gras supérieurs ou leurs sels et d'agents dispersants non ioniques et séparation des particules d'encres d'impression détachées d'avec la suspension de matière fibreuse par flottation, caractérisé en ce que l'on ajoute dans le dissolveur de matière de 1 à 20 % en poids, par rapport à l'acide gras ou au sel d'acide gras, d'un dérivé d'α-hydroxyamine de formule générale

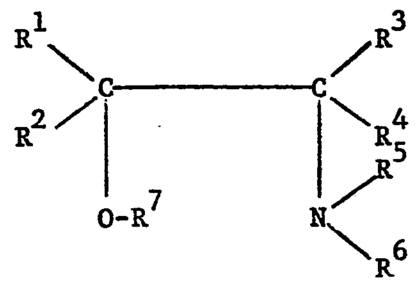

(I)

dans laquelle

$R^1$, $R^2$, $R^3$, $R^4$ = H ou groupes alkyle en $C_1$-$C_{17}$ identiques ou différents, la somme des atomes de carbone de $R^1$, $R^2$, $R^3$, $R^4$ allant de 6 à 22,

$R^5$, $R^6$ = H ou groupes alkyle en $C_1$-$C_{17}$ identiques ou différents ou groupes de formule $(C_nH_{2n}O)_xH$, avec n = 2 ou 3 et x = 1 à 10,

$R^7$ = H ou un groupe de formule $(C_nH_{2n}O)_xH$, avec n = 2 ou 3 et x = 1 à 10, ou 1 à 20 parties en poids d'un dérivé quaternisé d'α-hydroxyamine dérivant d'un tel composé par introduction d'un groupe alkyle en $C_1$-$C_4$ à l'azote.

2. Procédé selon la revendication 1, caractérisé en ce que l'on ajoute au dissolveur les produits chimiques ci-après, aux quantités indiquées par rapport aux vieux papiers :

2 à 5 % en poids de silicate alcalin

0,5 à 3 % en poids de peroxyde d'hydrogène (à 100 %)

0,5 à 2 % en poids d'hydroxyde de sodium (à 100 %)

0,5 à 2 % en poids d'acides gras ou sels d'acides gras

0,005 à 0,4 % en poids d'un dérivé d'α-hydroxyamine de formule I ou d'un produit de quaternisation correspondant

0,02 à 0,5 % en poids d'agents dispersants non ioniques.

3. Procédé selon la revendication 1 ou 2, caractérisé en ce que l'on ajoute de 1 à 20 % en poids, par rapport à l'acide gras ou au sel d'acide gras, d'un dérivé d'α-hydroxyamine de formule I préparé à partir d'oléfines en $C_{10}$-$C_{14}$ à chaîne droite en faisant suivre le cas échéant d'une quaternisation.

4. Procédé selon l'une des revendications 1 à 3, caractérisé en ce que la température opératoire dans le dissolveur est de 15 à 25 °C.